(19) **Europäisches Patentamt / European Patent Office / Office européen des brevets**

(11) **EP 4 738 661 A1**

(12) **EUROPEAN PATENT APPLICATION**

(43) Date of publication:
06.05.2026 Bulletin 2026/19

(51) International Patent Classification (IPC):
*H02K 3/28* (2006.01)

(21) Application number: 25211657.9

(52) Cooperative Patent Classification (CPC):
H02K 3/28

(22) Date of filing: 28.10.2025

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 01.11.2024 KR 20240153807
11.03.2025 KR 20250031217

(71) Applicant: Hyundai Mobis Co., Ltd.
Gangnam-gu
Seoul 06141 (KR)

(72) Inventor: YEON, Jun Mo
16891 Yongin-si, Gyeonggi-do (KR)

(74) Representative: Jung, Minkyu
Wuesthoff & Wuesthoff
Patentanwälte und Rechtsanwalt PartG mbB
Schweigerstraße 2
81541 München (DE)

(54) **CONTINUOUS WINDING ASSEMBLY**

(57) The present invention relates to a continuous winding assembly (1000), and more particularly, to a continuous winding assembly for winding on a motor stator. The continuous winding assembly of the present invention combines three types of windings (100, 200, 300) of different lengths to form parallel windings and applies equivalent series turns to allow application to odd-numbered layers, and further achieves electromagnetic balance between the windings even with standard-pitch continuous hairpin windings, thereby suppressing circulating currents and maximizing manufacturing efficiency.

FIG. 2

## Description

BACKGROUND OF THE INVENTION

Field of the Invention

The present invention relates to a continuous winding assembly, and more particularly, to a continuous winding assembly for winding on a motor stator.

Description of the Related Art

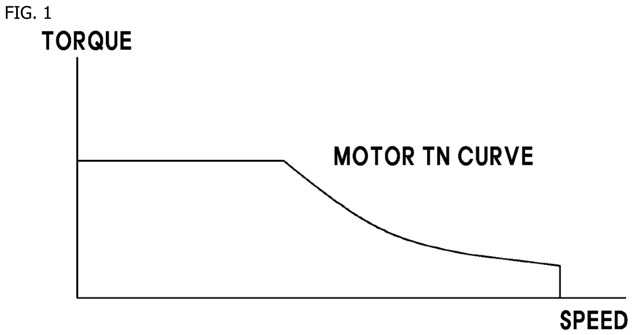

Continuous hairpin windings are composed of a plurality of conductors traversing continuously multiple slots, providing advantageous features in quality control and productivity by minimizing welding points. Typically, one phase includes two or more parallel windings, each formed of two conductors with opposing current directions. This structure is applicable only to motors with an even number of layers, which imposes design constraints on the selection of the number of equivalent series turns, a critical parameter in motor design. As illustrated in FIG. 1, the number of equivalent series turns is a key factor that determines torque and output, where a larger number of equivalent series turns increases low-speed torque but reduces output torque at high speed. Selecting an appropriate number of series turns within limited current and voltage ranges has been a fundamental challenge in motor design.

The equivalent series turns of a hairpin winding are calculated by combining the number of slots, the number of phases, the number of layers, and the number of parallel circuits, and under actual mass-production conditions, the selectable series turns are limited. Such limitations reduce design flexibility. For example, under mass-production feasible conditions, the maximum number of layers is 10 and the maximum number of parallel circuits is approximately 4, under which the selectable equivalent series turns are limited to multiples of 8, namely 8, 16, 24, 32, 40, 48, and 64.

Moreover, for two or more parallel windings forming a single phase, the back electromotive force must be maintained with the same magnitude and phase, but any imbalance generates circulating currents that degrade motor performance. To resolve back electromotive force imbalance between parallel windings, each parallel winding must change its position within the slot group, and non-standard pitches must be applied for odd-numbered layers. This requires different conductor patterns for each parallel winding, increasing the number of conductor types and introducing complexity in the manufacturing process. Consequently, the prior art faces significant limitations in design and manufacturing due to restrictions on the number of equivalent series turns and imbalance among parallel windings. New designs and techniques are required to overcome these problems.

Documents of Related Art

(Patent Document 1) Korean Published Patent 10-2021-0031762, "Winding Weaving Method of Electromechanical Components"

SUMMARY OF THE INVENTION

The present invention has been conceived to solve the above problems, and it is an object of the invention to provide a continuous winding assembly in which three types of windings of different lengths are combined to form parallel windings and the equivalent series turns are applied to allow application to odd-numbered layers, and in which electromagnetic balance between the windings can be achieved even with standard-pitch continuous hairpin windings, thereby suppressing circulating currents while maximizing manufacturing efficiency.

In order to accomplish the above objects, a continuous winding assembly applied to a stator including a predetermined slot group disposed adjacent to a pole of a rotor and at continuous positions, one slot group per pole of the rotor, according to an embodiment of the present invention includes a plurality of first winding parts electrically connected at one end thereof to a current input terminal and formed with a standard pitch, a plurality of second winding parts electrically connected at one end thereof to a neutral point and formed with a standard pitch, and a plurality of third winding parts electrically connected at one end and the other end to the plurality of first winding parts and the plurality of second winding parts, respectively, and formed with a standard pitch, wherein the total number of layers in which the plurality of first winding parts, the plurality of second winding parts, and the third winding parts are wound is odd.

In addition, each of the plurality of first winding parts, the plurality of second winding parts, and the third winding parts is wound across a plurality of slot groups included in the stator, and continuously traverses a plurality of slots, one slot per slot group.

In addition, the first winding part includes a first-1 terminal electrically connected to the current input terminal and a first-2 terminal electrically connected to the third winding part, the second winding part includes a second-1 terminal electrically connected to the neutral point and a second-2 terminal electrically connected to the third winding part, and the third winding part includes a third-1 terminal electrically connected to the first-2 terminal and a third-2 terminal electrically connected to the second-2 terminal, the plurality of first winding parts, the plurality of second winding parts, and the third winding parts being all provided in equal numbers and coupled in a one-to-one correspondence.

In addition, the current direction of the second winding part is opposite to the current directions of the first winding part and the third winding part.

In addition, the first winding part is wound in odd-numbered layers from the radially inner side to the radially outer side of the plurality of slots, and the second winding part is wound in even-numbered layers from the radially inner side to the radially outer side of the plurality of slots.

In addition, the third winding part is wound in the outermost radially odd-numbered layer of the plurality of slots, a portion of the outermost odd-numbered layer is wound with a portion of the first winding part, and the remaining portion of the outermost odd-numbered layer not wound with the first winding part is wound with a portion of the third winding part.

In addition, the third-1 terminal is wound in a slot adjacent to the first-2 terminal, the third-1 terminal and the first-2 terminal being welded together, and the third-2 terminal is wound in a slot adjacent to the second-2 terminal, the third-2 terminal and the second-2 terminal being welded together.

In addition, the first winding part, the second winding part, and the third winding part are inserted into the plurality of slots and include a plurality of slot insertion portions extending in the axial direction of the motor, and jump portions provided between the slot insertion portions and extending by a standard pitch.

In addition, the first winding part has a longer extended length than the second winding part, and the second winding part has a longer extended length than the third winding part.

In addition, the number of slots in which the first winding part, the second winding part, and the third winding part are wound satisfies the following equation:

$$[Equation]\quad \begin{cases} L_1 = \dfrac{p}{2}(n-1) + \dfrac{p}{2} \\ L_2 = \dfrac{p}{2}(n-1) \\ L_3 = \dfrac{p}{2} \end{cases},$$

where $L_1$ is the number of slot insertion portions of the first winding part, $L_2$ is the number of slot insertion portions of the second winding part, $L_3$ is the number of slot insertion portions of the third winding part, p is the number of poles, and n is the number of layers per slot.

BRIEF DESCRIPTION OF THE DRAWINGS

FIG. 1 is a graph illustrating a motor TN curve with respect to torque and speed;
FIG. 2 is a schematic diagram illustrating one parallel winding of a continuous winding assembly according to the present invention;
FIG. 3 is a schematic diagram illustrating a first winding part, a second winding part, and a third winding part of the continuous winding assembly according to the present invention;
FIG. 4 is a partial schematic diagram illustrating a first-1 terminal and a second-1 terminal of the continuous winding assembly according to the present invention;
FIG. 5 is a partial schematic diagram illustrating a first-2 terminal, a second-2 terminal, and the third winding part of the continuous winding assembly according to the present invention;
FIG. 6 is a schematic diagram illustrating the entire winding of the continuous winding assembly according to the present invention;
FIG. 7 is a partial schematic diagram illustrating a first-1 terminal and a second-1 terminal of the entire winding of the continuous winding assembly according to the present invention; and
FIG. 8 is a partial schematic diagram illustrating a first-2 terminal, a second-2 terminal, and a third winding part of the entire winding of the continuous winding assembly according to the present invention.

DETAILED DESCRIPTION OF THE INVENTION

In the following, the technical aspects of the present invention will be described in more detail with reference to the accompanying drawings. Prior to this, the terms and words used in the following specification and claims should not be construed in a limited sense to their usual or dictionary meanings but should be interpreted according to the meanings and concepts that conform to the technical ideas of the present invention, based on the principle that the inventor can appropriately define the terms to best describe their invention.

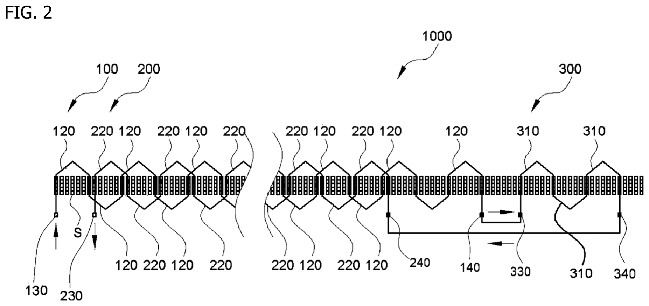

Hereinafter, a basic configuration of the continuous winding assembly 1000 of the present invention will be described with reference to FIG. 2.

The present invention is applied to a stator that includes, for each pole of a rotor, a predetermined slot group disposed adjacent to the pole and arranged in consecutive positions, and as illustrated in FIG. 2, may include a first winding part 100, a second winding part 200, and a third winding part 300. The first winding part 100, the second winding part 200, and the third winding part 300 may each be provided in plural numbers. FIG. 2 illustrates all slots S of the stator unfolded by layer (with the number of slots S shown as the product of the number of stator slots S and the number of layers). More specifically, one end of the first winding part 100 may be electrically connected to a current input terminal. In addition, one end of the second winding part 200 may be electrically connected to a neutral point, and both ends of the third winding part 300 may be in communication with the first winding part 100 and the second winding part 200. By dividing the wire into these three parts, productivity may be improved.

Here, the first winding part 100, the second winding part 200, and the third winding part 300 may be wound on a plurality of slot groups included in the stator and may be formed to sequentially traverse a plurality of slots S, one in each slot S of the slot group. In addition, the first winding part 100, the second winding part 200, and the third winding part 300 may be provided in a number corresponding to the number of slots S included in a slot group, such that coils are wound on all the plurality of slots S.

Here, the first winding part 100 may include a first-1 terminal 130 electrically connected to a current input terminal and a first-2 terminal 140 electrically connected to the third winding part 300, the second winding part 200 may include a second-1 terminal 230 electrically connected to a neutral point and a second-2 terminal 240 electrically connected to the third winding part 300, and the third winding part 300 may include a third-1 terminal 330 electrically connected to the first-1 terminal 130 and a third-2 terminal 340 electrically connected to the second-2 terminal 240. The first winding part 100, the second winding part 200, and the third winding part 300 may each be provided in the same number and may be coupled in a one-to-one correspondence. That is, the first winding part 100, the second winding part 200, and the third winding part 300 may form a single parallel winding, which may be provided in parallel for each slot S within a slot group.

The continuous winding assembly 1000 according to the present invention may form one parallel winding in which current flows along a current supply terminal, the first winding part 100, the third winding part 300, the second winding part 200, and a neutral point. In this case, the current direction of the second winding part 200 may be opposite to the current directions of the first winding part 100 and the third winding part 300. Accordingly, current may flow from the current supply terminal along the first winding part 100 in one circumferential direction, move along the third winding part 300 in the opposite circumferential direction, and be delivered to the neutral point.

Furthermore, the first winding part 100, the second winding part 200, and the third winding part 300 may be wound in different layers of the plurality of slots S, and the total number of layers in which the first winding part 100, the second winding part 200, and the third winding part 300 are wound may be odd. That is, by separating the layers through which current flows in one circumferential direction, the layers through which current flows in the opposite circumferential direction, and the layers that reverse the current direction, it is possible to wind the coils in odd-numbered layers while maintaining inductance balance, thereby increasing the design freedom of the stator and motor.

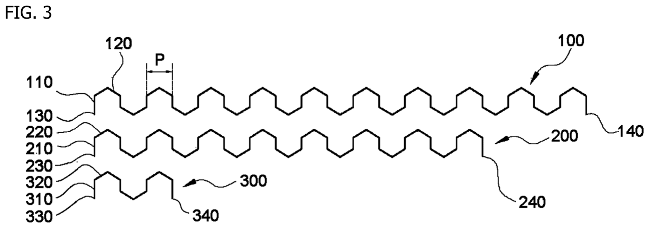

Hereinafter, the detailed configuration of the first winding part 100, the second winding part 200, and the third winding part 300 of the present invention will be described in more detail with reference to FIGS. 3 to 5.

The first winding part 100, the second winding part 200, and the third winding part 300 may be inserted into the plurality of slots S and may each include a plurality of slot insertion portions 110, 210, and 310 extending in the axial direction of the motor, as well as jump portions 120, 220, and 320 provided between the slot insertion portions 110, 210, and 310 and extending by a standard pitch (illustrated as p in FIG. 3). Here, the pitch of the jump portions 120, 220, and 320 corresponds to the number of slots between the slot insertion portions 110, 210, and 310 at both ends of the jump portion plus one, and all jump portions 120, 220, and 320 may have the same pitch.

More specifically, as illustrated in FIG. 3, the first winding part 100 may have a longer extension length than the second winding part 200, and the second winding part 200 may have a longer extension length than the third winding part 300. More specifically, the lengths of the first winding part 100, the second winding part 200, and the third winding part 300 are proportional to the number of slot insertion portions 110, 210, and 310 (with all jump portions 120, 220, and 320 having a standard pitch P), and the number of slot insertion portions 110, 210, and 310 of the first, second, and third winding parts 100, 200, and 300 may follow the following equation.

Equation:
$$\begin{cases} L_1 = \dfrac{p}{2}(n-1) + \dfrac{p}{2} \\ L_2 = \dfrac{p}{2}(n-1) \\ L_3 = \dfrac{p}{2} \end{cases},$$

where $L_1$ is the number of slot insertion portions 110 of the first winding part, $L_2$ is the number of slot insertion portions 210 of the second winding part, $L_3$ is the number of slot insertion portions 310 of the third winding part, p is the number of poles, and n is the number of layers per slot S.

The extended lengths of the first winding part 100, the second winding part 200, and the third winding part 300, i.e., the number of slots S which they traverse, may be derived by multiplying $L_1$, $L_2$, and $L_3$ by the number of slots S included in the standard pitch, respectively. That is, when the number of slot insertion portions 110, 210, and 310 is p, it means that the winding part extends around one full circumference of the stator.

The first winding part 100 may be wound on the odd-numbered layers from the radial inner side to the outer side of the plurality of slots S, and the second winding part 200 may be wound on the even-numbered layers from the radial inner side to the outer side. That is, the layers in which the first winding part 100 and the second winding part 200 are wound may be alternately arranged in the radial direction. For example, when there are five layers, the first winding part 100 may be wound on the first, third, and fifth layers from the radial inner side, and the second winding part 200 may be wound on the second and fourth layers. The layers wound with the first winding part 100 are shown in black in FIG. 2, and the plurality of slots S and layers wound with the second winding part 200 and the third winding part 300 are shown in gray in FIG. 2.

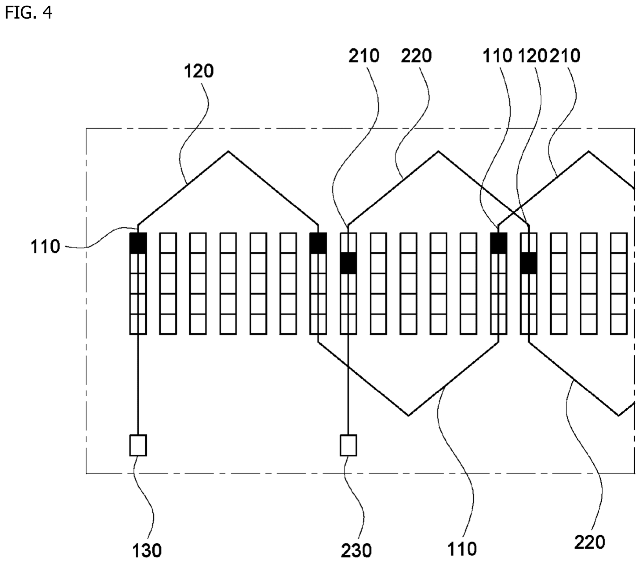

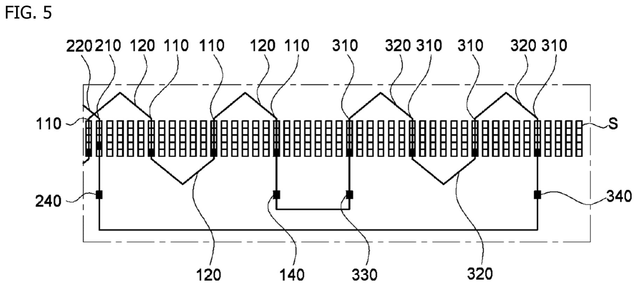

As illustrated in FIG. 4, the second-1 terminal 230 of the second winding part 200 may be spaced from the first-1 terminal 130 of the first winding part 100 by a pitch greater by one slot S group, and as illustrated in FIG. 5, the second-2 terminal 240 of the second winding part 200 may be spaced from the first-2 terminal 140 of the first winding part 100 by a pitch greater than two or more slot S groups. In this case, the third winding part 300 may be extended and wound over the distance corresponding to the spaced distance between the first-2 terminal 140 and the second-2 terminal 240. More specifically, when the number of layers is five, the third winding part 300 may be wound on the fifth layer from the radial inner side, i.e., the outermost layer of the plurality of slots S adjacent to the central hole of the stator. That is, part of the fifth layer may include the first winding part 100 and the first-2 terminal 140, while the remaining part of the fifth layer may include the third winding part 300, such that portions of the first winding part 100 and the third winding part 300 together form a full circumferential winding. In this case, when the fifth layer is divided between the first winding part 100 and the third winding part 300, the lengths of the areas wound with the first winding part 100 and the third winding part 300 may not be identical. Accordingly, the third-1 terminal 330 of the third winding part 300 provided in the fifth layer may be wound in the slot S adjacent to the first-2 terminal 140 in the fifth layer, and the third-1 terminal 330 and the first-2 terminal 140 may be welded or terminal-connected. Likewise, the third-2 terminal 340 may be wound in the slot S adjacent to the second-2 terminal 240 provided in the fourth layer, and the third-2 terminal 340 and the second-2 terminal 240 may be welded or terminal-connected.

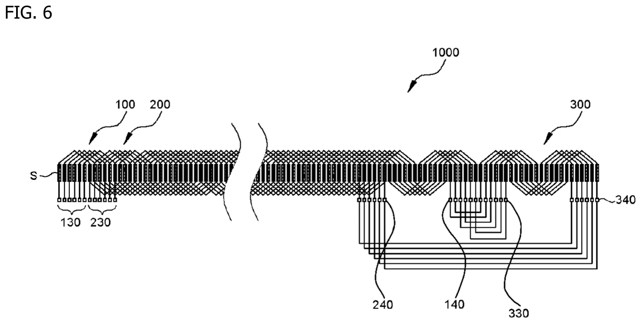

Hereinafter, the overall configuration of the continuous winding assembly 1000 according to the present invention will be described in more detail with Reference to FIGS. 6 to 8.

As illustrated in FIG. 6, at least one of the first winding part 100, the second winding part 200, or the third winding part 300 may be inserted into and wound in all slots S. In this case, the corresponding strands of the first winding part 100 and the second winding part 200, and the first winding part 100 and the third winding part 300, may be wound at different positions within the slot S groups. Meanwhile, the strands of the second winding part 200 and the third winding part 300 may be wound at the same positions within the slot S groups. For example, when a strand of the first winding part 100 is wound in the first slot S on one side of a slot S group, the plurality of slots in which the electrically connected strands of the second winding part 200 and the third winding part 300 are wound may be the second slot S on the same side of the slot S group.

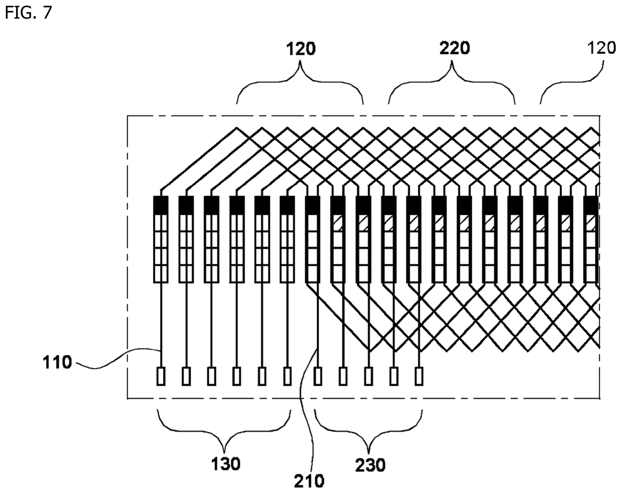

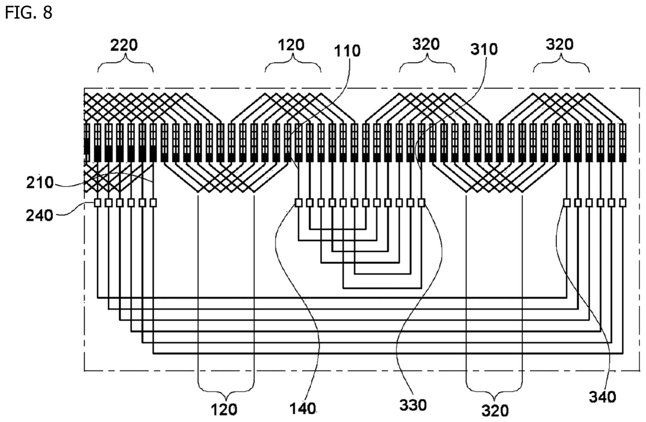

Furthermore, as illustrated in FIG. 7, the terminals of the first winding part 100 and the second winding part 200 may be arranged consecutively (with the six terminals on the left side in the drawing being the first-1 terminals 130 of the first winding part 100, and the six terminals on the right side in the drawing being the second-1 terminals 230 of the second winding part 200). As illustrated in FIG. 8, the first winding part 100 and the third winding part 300, as well as the second winding part 200 and the third winding part 300, may be electrically connected to each other. In this case, the third-1 terminal 330 of the third winding part 300 provided in the fifth layer may be wound in a slot S adjacent to the first-2 terminal 140 provided in the fifth layer, such that the third-1 terminal 330 and the first-2 terminal 140 may be welded together. In addition, the third-2 terminal 340 of the third winding part 300 provided in the fifth layer may be wound in a slot S adjacent to the second-2 terminal 240 provided in the fourth layer, such that the third-2 terminal 340 and the second-2 terminal 240 may be welded together.

The continuous winding assembly according to the present invention, having the above configuration, is advantageous in suppressing circulating currents and maximizing manufacturing efficiency by combining three types of windings of different lengths to form parallel windings, applying equivalent series turns to allow use in odd-numbered layers, and achieving electromagnetic balance between the windings even with standard-pitch continuous hairpin windings.

The technical concept of the present invention should not be interpreted solely based on the above-described embodiments. It should be understood that various modifications and changes are possible within the scope of the claims without departing from the essence of the invention claimed in the claims. Thus, such improvements and modifications fall within the protection scope of the present invention as long as they are obvious to those skilled in the art.

DESCRIPTION OF REFERENCE NUMERALS

1000: continuous winding assembly
100: first winding part
110: slot insertion portion of first winding part
120: jump portion of first winding part
130: first-1 terminal
140: first-2 terminal
200: second winding part
210: slot insertion portion of second winding part
220: jump portion of second-2 winding part
230: second-1 terminal
240: second-2 terminal
300: third winding part
310: slot insertion portion of third winding part
320: jump portion of third winding part
330: third-1 terminal
340: third-2 terminal

S: slot

**Claims**

1. A continuous winding assembly applied to a stator including a predetermined slot group disposed adjacent to a pole of a rotor and at continuous positions, one slot group per pole of the rotor, the assembly comprising:

   a plurality of first winding parts electrically connected at one end thereof to a current input terminal and disposed with a standard pitch;
   a plurality of second winding parts electrically connected at one end thereof to a neutral point and disposed with a standard pitch; and
   a plurality of third winding parts electrically connected at one end and the other end thereof to the plurality of first winding parts and the plurality of second winding parts, respectively, and disposed with a standard pitch,
   wherein a total number of layers in which the plurality of first winding parts, the plurality of second winding parts, and the third winding parts are wound is odd.

2. The continuous winding assembly of claim 1, wherein each of the plurality of first winding parts, the plurality of second winding parts, and the third winding parts is wound across a plurality of slot groups included in the stator, and continuously traverses a plurality of slots, one slot per slot group.

3. The continuous winding assembly of claim 1 or 2,

   wherein the plurality of first winding parts include a first-1 terminal electrically connected to the current input terminal and a first-2 terminal electrically connected to the plurality of third winding parts
   wherein the plurality of second winding parts include a second-1 terminal electrically connected to the neutral point and a second-2 terminal electrically connected to the plurality of third winding parts and
   wherein the plurality of third winding parts include a third-1 terminal electrically connected to the first-2 terminal and a third-2 terminal electrically connected to the second-2 terminal, the plurality of first winding parts, the plurality of second winding parts, and the third winding parts being all disposed in equal numbers and coupled in a one-to-one correspondence.

4. The continuous winding assembly of any one of claims 1 to 3, wherein a current direction of the plurality of second winding parts is opposite to current directions of the plurality of first winding parts and the plurality of third winding parts.

5. The continuous winding assembly of any one of claims 1 to 4, wherein the plurality of first winding parts are wound in odd-numbered layers from a radially inner side a the radially outer side of a plurality of slots, and the plurality of second winding parts are wound in even-numbered layers from the radially inner side to the radially outer side of the plurality of slots.

6. The continuous winding assembly of claim 5, wherein the plurality of third winding parts are wound in a outermost radially odd-numbered layer of the plurality of slots, a portion of the outermost odd-numbered layer is wound with a portion of the plurality of first winding parts, and remaining portion of the outermost odd-numbered layer not wound with the plurality of first winding parts are wound with a portion of the plurality of third winding parts.

7. The continuous winding assembly of any one of claims 3 to 6, wherein the third-1 terminal is wound in a slot adjacent to the first-2 terminal among the plurality of slots, the third-1 terminal and the first-2 terminal being welded together, and the third-2 terminal is wound in a slot adjacent to the second-2 terminal among the plurality of slots, the third-2 terminal and the second-2 terminal being welded together.

8. The continuous winding assembly of any one of claims 3 to 7, wherein the plurality of first winding parts, the plurality of second winding parts, and the plurality of third winding parts are inserted into a plurality of slots and include a plurality of slot insertion portions extending in an axial direction of the motor, and jump portions disposed between the slot insertion portions and extending by a standard pitch.

9. The continuous winding assembly of any one of claims 3 to 8, wherein the plurality of first winding parts have a longer extended length than the plurality of second winding parts, and the plurality of second winding parts have a longer extended length than the plurality of third winding parts.

10. The continuous winding assembly of claim 8, wherein a number of the slots in which the plurality of first winding parts, the plurality of second winding parts, and the plurality of third winding parts are wound satisfies the following equation:

$$\begin{cases} L_1 = \frac{p}{2}(n-1) + \frac{p}{2} \\ L_2 = \frac{p}{2}(n-1) \\ L_3 = \frac{p}{2} \end{cases}$$

[Equation]     ,

where $L_1$ is the number of slot insertion portions of the plurality of first winding parts, $L_2$ is the number of slot insertion portions of the plurality of second winding parts, $L_3$ is the number of slot insertion portions of the plurality of third winding parts, p is the number of poles, and n is the number of layers per slot.

$$\begin{cases} L_1 = \frac{p}{2}(n-1) + \frac{p}{2} \\ L_2 = \frac{p}{2}(n-1) \end{cases}$$

FIG. 1

FIG. 2

FIG. 3

FIG. 4

FIG. 5

FIG. 6

FIG. 7

FIG. 8

# EP 4 738 661 A1

Europäisches
Patentamt

European
Patent Office

Office européen
des brevets

## EUROPEAN SEARCH REPORT

**Application Number**

EP 25 21 1657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 429 064 A1 (VALEO EQUIP ELECTR MOTEUR [FR]) 16 January 2019 (2019-01-16) * paragraphs [0035], [0050]; figures 3, 4a - 4i, 6, 8 * | 1-10 | INV. H02K3/28 |

-----

**TECHNICAL FIELDS SEARCHED (IPC)**

H02K

The present search report has been drawn up for all claims

| Place of search | Date of completion of the search | Examiner |
|---|---|---|
| The Hague | 9 March 2026 | Afinowi, Ibrahim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 1657

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2026

| Patent document cited in search report | Publication date | Patent family member(s) | Publication date |
|---|---|---|---|
| EP 3429064 A1 | 16-01-2019 | CN 109245464 A | 18-01-2019 |
| | | EP 3429064 A1 | 16-01-2019 |
| | | FR 3069117 A1 | 18-01-2019 |
| | | JP 2019041568 A | 14-03-2019 |
| | | US 2019020238 A1 | 17-01-2019 |

EPO FORM P0459

For more details about this annex : see Official Journal of the European Patent Office, No. 12/82

**EP 4 738 661 A1**

**Patent documents cited in the description**

- KR 1020210031762